# EUROPEAN PATENT SPECIFICATION

(11) **EP 2 918 959 B1**
(45) Date of publication and mention of the grant of the patent: **13.11.2019**
(21) Application number: 13838134.8
(22) Date of filing: 12.09.2013
(51) Int. Cl.: F28F 9/02, B60H 1/32, F25B 13/00, F25B 39/04

(54) **REFRIGERATION CYCLE FOR AIR CONDITIONING VEHICLE, AND HEAT EXCHANGER**
KÄLTEKREISLAUF FÜR DIE KLIMAANLAGE EINES FAHRZEUGES UND WÄRMETAUSCHER
CYCLE DE RÉFRIGÉRATION POUR CLIMATISATION DE VÉHICULE, ET ÉCHANGEUR DE CHALEUR

(30) Priority: 18.09.2012 JP 2012204108
(43) Date of publication of application: 16.09.2015
(73) Proprietor: Valeo Japan Co., Ltd., Saitama 360-0193 (JP)
(72) Inventor: IIJIMA Kenji, Kumagaya-shi Saitama 360-0193 (JP)
(74) Representative: Metz, Gaëlle
(86) International application number: PCT/JP2013/074611
(87) International publication number: WO 2014/045983

(56) References cited:
- JP-A- H11 182 977
- JP-A- 2007 278 558
- JP-A- 2012 145 271

## Description

### BACKGROUND OF THE INVENTION

### Field of the Invention

The present invention relates to a vehicle air-conditioning refrigeration cycle configured to perform cooling and warming in a cabin of a vehicle, and improved in cooling and warming performance by specifying suitable conditions of a heat exchanger being used as a radiator of a refrigeration cycle at the time of cooling and as a heat absorber of a heat pump at the time of warming.

### 2. Description of Related Art

In general, warming in a cabin of a vehicle is performed by using heat of an internal combustion engine. In contrast, those having a vehicle drive system having a relatively lower calorific power such as electric vehicles and hybrid cars employ a refrigeration cycle configured to perform cooling of the interior of the cabin which also operates as a heat pump configured to perform warming, so that a configuration in which both cooling and warming are performed in the refrigeration cycle as described above is employed. Patent literature 1 discloses an apparatus of a type described above.

In the case where cooling and warming are performed in the refrigeration cycle, a heat exchanger configured to exchange heat between air outside the cabin of the vehicle and coolant is used as a radiator in the refrigeration cycle at the time of cooling and used as a heat absorber of the heat pump at the time of warming.

The heat exchanger having the configuration as described above has a problem of lowering of heat exchanging efficiency due to lowering of an amount of air passage caused by frozen dew condensation water when being used as a heat absorber. In particular, since a surface of the heat exchanger which is in contact with air has a dense configuration in view of a performance of heat exchange and mounting space, countermeasures for freezing are important for those mounted on vehicles.

For example, Patent literature 2, Patent literature 3, and Patent literature 4 disclose heat exchangers having a plurality of tubes arranged in parallel to each other, in which the plurality of tubes are arranged so that one end is oriented upward and the other end is oriented downward with respect to a vertical direction of the vehicle. This configuration has an advantage that dew condensation water can easily flow along the tubes downward in comparison with the heat exchangers having a plurality of tubes arranged horizontally. When freezing is in progress, the frozen state may be canceled by using the heat exchanger temporarily as a radiator of the refrigeration cycle. This is also referred to as a restoration operation. If the configuration allows melted water to run along the tubes downward easily, time required for the restoration operation is advantageously reduced. JP2012145271A2 discloses a heat exchanger including a single refrigerant pipe for introducing a refrigerant into a receiver tank from a condenser header part, and a mounting member for mounting the receiver tank to a core. The mounting member has a refrigerant inlet passage connecting the refrigerant pipe to the interior of the receiver tank, and a refrigerant outlet passage connecting the interior of the receiver tank to a sub-cooler header part.

JP11182977A2, on which the preamble of claim 1 is based, discloses a multiflow type condenser for an automobile air conditioner comprising: a pair of header pipes disposed in parallel with each other and arranged to have an inlet and an outlet; a pluratlity of flat tubes each connected to said header pipes at opposite ends thereof, each of said flat tubes having a plurality of inside fluid paths, a hydraulic diameter of said inside fluid paths being in the range of about 1 to 1.7 mm; a plurality of corrugated fins each disposed between adjacent flat tubes; at least a pair of baffles disposed in said header pipes one by one; each of said baffles having a projection inserted into a slit provided with each header pipes and dividing each header pipes into a plurality of chambers; at least one by-pass passageway formed in the baffles to route a vapor-abundant phase of said refrigerant from an upper chamber to a lower chamber within the same header pipes by providing a communication path between the adjacent chambers; a ratio of a hydraulic diameter of said by-pass passageway over said hydraulic diameter of said inside fluid paths being in the range of about 0.28 to 2.25; and an area of a pass on the inlet side is about 30 percent to 65 percent of an overall area of all of said passes.

JP2007278558A2 discloses a heat exchanger having tubes defining refrigerant passages therein and fins disposed between the tubes. The tubes have tube main walls opposed to each other. The fins are joined to the tube main walls. The tube main walls have projections that project inside of the tubes and define recesses on outer sides of the tubes. Each of the tubes has an outer dimension, in a direction perpendicular to the tube main walls, in a range between equal to or greater than 0.8 mm and equal to or less than 1.9 mm.

### Patent Literature

PTL 1 : Japanese Patent No.3486851
PTL 2 : JP-A-9-280754
PTL 3 : JP-A-2004-177082
PTL 4 : JP-A-2004-271143

### SUMMARY OF THE INVENTION

A heat exchanger configured to exchange heat between air outside a cabin of a vehicle and coolant needs to have a configuration which is capable of achieving a radiating performance for the case of being used as a radiator and a heat absorbing performance for the case of being used as a heat absorber.

The heat exchanger of this type has a configuration in which both ends of a plurality of tubes are connected respectively to a pair of headers, and a first piping joint and a second piping joint configured to flow out and in of a coolant are provided at predetermined positions of the pair of headers. Normally, in order to improve heat exchange efficiency of coolant, a configuration in which heat exchange is effected uniformly over the entire circulating coolant is recommended. Specifically, the interiors of the respective headers are partitioned by partitioning devices, and the plurality of tubes constitute a plurality of tube sets in accordance with intervals of the interiors of the respective headers partitioned by the partitioning devices. In other words, the heat exchanger is set to allow the coolant to circulate in the plurality of tube sets and move between the headers by a plurality of times in order to uniformize the heat exchange of the coolant.

In the case of arranging the plurality of tubes so that one end is oriented upward and the other end is oriented downward with respect to a vertical direction of the vehicle as described above, tube sets in which the coolant moves upward and the tube sets in which the coolant moves downward are arranged alternately. Therefore, the circulating state of the coolant differs significantly from one tube set to another, so that a further structural contraption is needed while considering such circumstance in order to improve the heat exchange efficiency.

Inventors of this application have repeated test production and experiment of the vehicle air-conditioning refrigeration cycle for cooling and warming while considering a radiating performance, a heat absorbing performance, and countermeasures for freezing required for the heat exchanger, and achieved specification of a significantly superior configuration as a result of earnest inspection and reached the invention.

In view of such circumstances, it is an object of the invention to improve cooling and worming performances of the vehicle air-conditioning refrigeration cycle.

A first aspect of the invention is heat exchanger as defined in claim 1.

In a second aspect of the invention, the heat exchanger according to the first aspect has a configuration in which the number of the tube sets (A, B, C, and D) is an even number, and both of the first piping joint (160) and the second piping joint (170) are provided on the second header (150).

In a third aspect of the invention, the heat exchanger according to the first or second aspect has a configuration in which the number of the tube sets (A, B, C, and D) falls within a range from 4 to 6.

In a fourth aspect of the invention, the heat exchanger according to any of the first to third aspects has a configuration in which a length of the tubes (110,110) is 0.9 m or shorter.

In a fifth aspect of the invention, the heat exchanger according to the fourth aspect has a configuration in which a total cross-sectional area of flow channels of the coolant in the tube sets (A, B, C, and D) falls within a range from 150 to 500 mm².

A sixth aspect of the invention is a vehicle air-conditioning refrigeration cycle as defined in claim 6.

According to the invention, an improvement of the cooling and warming performance of the vehicle air-conditioning refrigeration cycle is achieved.

### BRIEF DESCRIPTION OF THE DRAWINGS

Fig. 1A is an explanatory drawing of an example of a vehicle air-conditioning refrigeration cycle of the invention illustrating a flow of coolant during a cooling operation with black arrows;
Fig. 1B is an explanatory drawing of an example of the vehicle air-conditioning refrigeration cycle of the invention illustrating a flow of the coolant during a warming operation with hollow arrows;
Fig. 2 is a front view of a first heat exchanger according to the example of the invention, in which the black arrows indicate a flow of the coolant during the cooling operation and the hollow arrows indicate a flow of the coolant during the warming operation; and
Fig. 3 is an explanatory drawing illustrating a structure of the first heat exchanger according to the example of the invention, in which the black arrows indicate a flow of the coolant during the cooling operation and the hollow arrows indicate a flow of the coolant during the warming operation.

### DESCRIPTION OF EMBODIMENTS

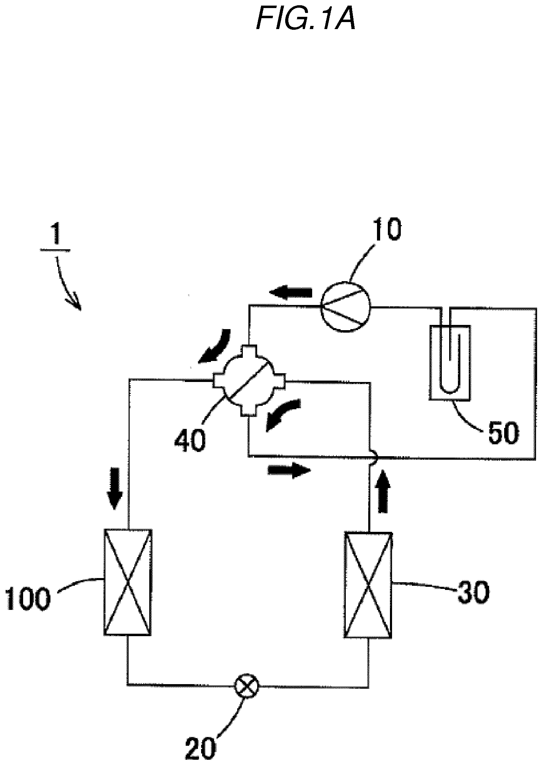

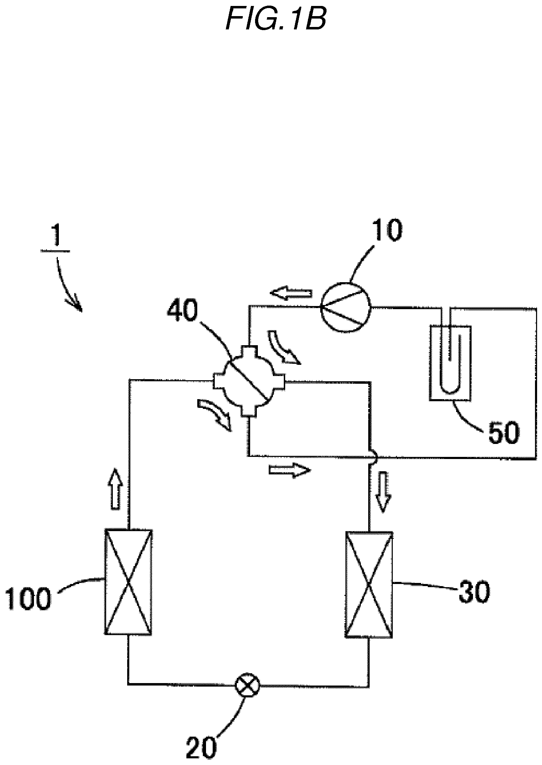

An example of the invention will be described with reference to the drawings. A vehicle air-conditioning refrigeration cycle 1 illustrated in Fig. 1 includes: a compressor 10 configured to compress coolant; an expansion apparatus 20 configured to expand the compressed the coolant; a first heat exchanger 100 configured to exchange heat between air outside a cabin of a vehicle and the coolant; a second heat exchanger 30 configured to exchange heat between air inside a cabin of the vehicle and the coolant; and a coolant flow channel switching device 40 configured to switch a flow of the coolant between a cooling operation and a warming operation. The illustrated coolant flow channel switching device 40 is a so-called four-way valve. Gaseous coolant separated by an accumulator 50 is sent to the compressor 10. A flow channel in which the coolant circulates is formed by connecting the compressor 10, the expansion apparatus 20, the first heat exchanger 100, the second heat exchanger 30, the coolant flow channel switching device 40, and the accumulator 50 with pipes. During the cooling operation, the coolant compressed by the compressor 10 is cooled by the first heat exchanger 100, and is expanded by the expansion apparatus 20, whereby air in the cabin of the vehicle is cooled by the second heat exchanger 30 (see Fig. 1A). During the warming operation, the coolant compressed by the compressor 10 heats air in the cabin of the vehicle by the second heat exchanger 30, is expanded by the expansion apparatus 20, and is heated by the first heat exchanger 100 (see Fig. 1B). In other words, the coolant circulating in the first heat exchanger 100 radiates heat to air outside the cabin during the cooling operation, and absorbs heat from air outside the cabin during the warming operation.

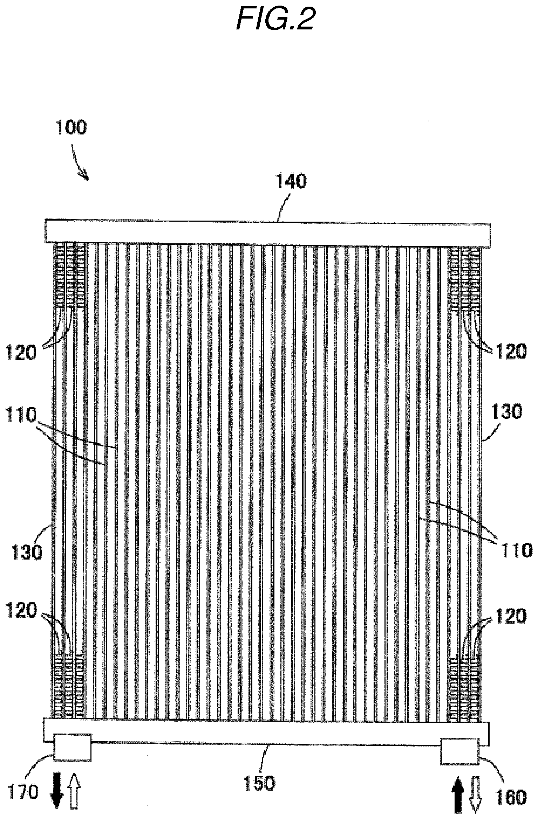

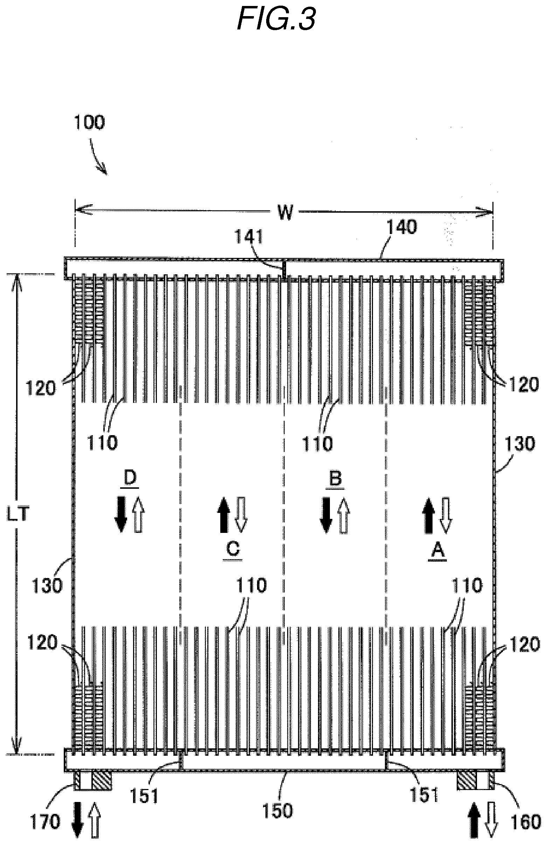

As illustrated in Fig. 2 and Fig. 3, the first heat exchanger 100 includes a plurality of tubes 110 arranged in parallel to each other, a plurality of corrugate fins 120 provided between the plurality of tubes 110, a first header 140 to which one of ends of each of the plurality of tubes 110 is connected, a second header 150 to which the other end of each of the plurality of tubes 110 is connected, a first piping joint 160 provided on the first header 140 or the second header 150, and a second piping joint 170 provided on the first header 140 or the second header 150. Reference numeral 130 in the drawing denotes a side plate, which is a reinforcing member.

The first header (140) and the second header (150) are partitioned in the interiors thereof by partitioning devices 141 and 151, respectively, at predetermined intervals. The plurality of tubes 110 constitute a plurality of tube sets A, B, C, and D in accordance with intervals of the interiors of the first header 140 and the second header 150 partitioned by the partitioning devices 141 and 151. Three or more of tube sets A, B, C, and D are provided. The coolant flowed in from one of the first piping joint 160 and the second piping joint 170 passes through the plurality of tube sets A, B, C and D while exchanging heat with air outside the cabin of the vehicle and flows out from the other one of the first piping joint160 and the second piping joint 170.

The plurality of tubes 110 are arranged so that one end is oriented upward and the other end is oriented downward with respect to a vertical direction of the vehicle.

The first piping joint 160 or the second piping joint 170 configured to flow out the coolant during the cooling operation is provided on the second header 150.

The illustrated first heat exchanger 100 is configured to allow the coolant to flow in from the first piping joint 160 and to flow out from the second piping joint 170 during the cooling operation. In other words, the second piping joint 170 is provided on the second header 150. During the warming operation, the coolant flows from the four-way valve reversely, and hence the coolant flows in from the second piping joint 170 and flows out from the first piping joint 160.

The first piping joint 160 or the second piping joint 170 configured to allow the coolant to flow in during the cooling operation is provided on the first header 140 if the number of the tube sets A, B, C, and D is an odd number, and is provided on the second header 150 if the number of the tube sets A, B, C, and D is an even number.

The illustrated first heat exchanger 100 includes four of the tube sets A, B, C, and D. The number of the tube sets is an even number, and both of the first piping joint 160 and the second piping joint 170 are provided on the second header 150. If the first piping joint 160 is provided on the first header 140, a height of the pipe to be connected to the first piping joint 160 and a height of the pipe to be connected to the second piping joint 170 are significantly different. However, according to the example, these heights may be set to be the same or substantially the same. Therefore, a piping structure is simplified, and a pipe connection work is also facilitated.

As regards the arrangement of the tube sets A, B, C, and D, the tube sets A and C in which the coolant moves upward during the cooling operation and the tube sets B and D in which the coolant moves downward are arranged alternately. During the warming operation, upward movement and downward movement of the coolant in the tube sets A, B, C, and D are inverted.

The number of tubes in the tube sets A, B, C, and D is set to the same so that the total cross-sectional areas of the flow channel become equivalent. The illustrated tube sets A, B, C, and D each include the 10 tubes 110. The desirable number of the tubes 110 falls within a range from 6 to 15. The number of the tubes 110 in the respective tube sets A, B, C, and D is basically the same. However, from the reason of effective usage of the space for mounting the first heat exchanger 100 on the vehicle or the like, one or two differences in the number of the pipes are allowable.

In the case of this example, a length LT of the tubes 110 is set to be 0.9 m or shorter, and is set to fall within a range from 0.15 to 0.90 m. The width W occupied by the plurality of tubes 110 and the plurality of corrugate fins 120 is set to fall within a range from 0.40 to 0.80 m. The pitch of the tubes 110 is set to fall within a range from 6 to 10 mm. The total cross-sectional area of the flow channel of the coolant in the respective tube sets A, B, C, and D is set to fall within a range from 150 to 500 mm². An flowing amount of the coolant of the first heat exchanger 100 during the cooling operation falls within a range from 50 to 250 kg/h. The flowing amount of the coolant of the first heat exchanger 100 during the warming operation falls within a range from 50 to 150 kg/h.

In this configuration, the first heat exchanger 100 allows easy running of dew condensation water along the tubes 110 and, in addition, ensures sufficient radiating performance and the heat absorbing performance. Consequently, cooling and warming performance of the vehicle air-conditioning refrigeration cycle is improved. Hereinafter, the idea will be descried.

According to the experiment conducted by the inventors of this application, it was found that freezing of the surfaces of the tube sets B and D in which the coolant moves upward during the warming operation occurs at a slower rate than that of the tube sets A and C in which the coolant moves downward at that time. The coolant flowing into the interior of the heat exchanger 100 is mixture of gaseous coolant and liquid-state coolant. It is considered that liquid-state coolant can hardly stay in the tube sets A and C in which the coolant moves downward. A space for allowing the coolant to evaporate is secured, and hence heat absorption is sufficiently performed. In contrast, it is considered that liquid-state coolant can easily stay in the tube sets B and D in which the coolant moves upward. If the liquid-state coolant stays, the space to allow the coolant to evaporate is not large even though the heat absorption is effected, so that quick heat absorption is not achieved, and freezing occurs at a relatively slower rate. Therefore, with the configuration having the tube sets B and D in which the coolant moves upward during the warming operation and the tube sets A and C in which the coolant moves downward, freezing of entire surface may be delayed. This configuration resists occurrence of a situation in which the ventilation flues of air, that is, the entire gaps between the plurality of tubes 110 and the plurality of corrugate fins 120 are frozen. Depending on the experiment, the heat absorbing performance is secured satisfactorily.

During the cooling operation, it is desirable to let the condensed liquid-state coolant to be flowed out quickly from the first heat exchanger 100. The coolant flowing into the interior of the heat exchanger 100 during the cooling operation is gaseous coolant. The coolant is flowed through the plurality of tube sets A, B, C, and D while radiating heat, and the percentage of the liquid-state coolant condensed by heat radiation gradually increases. The first piping joint 160 or the second piping joint 170 configured to flow out the coolant during the cooling operation is provided on the second header 150. In this configuration, during the cooling operation the coolant moves downward in the tube set D where the coolant passes at the end, and hence the liquid-state coolant is prevented from staying in the tube set D. If the liquid-state coolant is flowed out quickly, the space for radiating heat from the gaseous coolant is secured. Consequently, the radiating performance is reliably improved. According to the experiment, with the provision of three or more of the tube sets A, B, C, and D, the satisfactory radiating performance is secured.

The tube sets A and C in which the coolant moves upward during the cooling operation are subjected to easy stay of the condensed coolant. From this point, if the number of the tube sets A, B, C, and D is increased, the total cross-sectional area of the flow channels of the coolant in the respective tube sets A, B, C, and D is decreased, so that a flow rate of the coolant is increased. Consequently, the flow of the coolant is smoothened, and the circumstance in which the condensed coolant tends to stay is resolved. As a matter of course, if the number of the tube sets A, B, C, and D is increased too much, the total cross-sectional area of the flow channels of the coolant in the respective tube sets A, B, C, and D is also decreased, so that the coolant cannot flow easily. In such a case, a motive power of the compressor 10 is increased. When a test experiment was conducted in view of such circumstances while confirming performances during the cooling operation and the warming operation, respectively, the practical number of the tube sets A, B, C, and D was within a range from 3 to 8, and the optimal number fell within a range from 4 to 6.

The inventors of this application conducted test production and verification experiments on the first heat exchanger 100 repeatedly for obtaining superior cooling and warming performances, and achieved the vehicle air-conditioning refrigeration cycle 1 of this example. The fact that the configuration of this example is extremely effective is confirmed by comparative experiments with test products produced under different conditions.

As described thus far, the vehicle air-conditioning refrigeration cycle of this example achieves improvement of the cooling and warming performances by specifying desirable conditions of the first heat exchanger configured to exchange heat between the air outside the cabin of the vehicle and the coolant. The configuration of the respective portions of the example may be modified in design as needed within the technical scope described in Claims, and is not limited to those illustrated and described.

For example, in this example, the four-way valves are employed as the coolant flow channel switching device. Alternatively, however, as the apparatus disclosed in Patent literature 1, a configuration in which two each of the expansion apparatus and the second heat exchangers are provided, and the expansion apparatus and the second heat exchangers are switched during cooling operation and during warming operation by switching the flow channels by an opening-and-closing valve is also applicable. In this case, the coolant does not flow reversely.

The invention may be used suitably as a vehicle air-conditioning refrigeration cycle to be mounted on electric vehicles or hybrid cars.

### Reference Signs List

- 1: vehicle air-conditioning refrigeration cycle
- 10: compressor
- 20: expansion apparatus
- 30: second heat exchanger
- 40: coolant flow channel switching device
- 50: accumulator
- 100: first heat exchanger
- 110: tube
- 120: corrugate fin
- 130: side plate
- 140: first header
- 141: partitioning device
- 150: second header
- 151: partitioning device
- 160: first piping joint
- 170: second piping joint

## Claims

1. A heat exchanger (100) configured to be used in a vehicle air-conditioning refrigeration cycle (1) for cooling and warming a cabin of a vehicle and exchange heat between air outside the cabin of the vehicle and coolant, comprising:
a plurality of tubes (110, 110) arranged in parallel to each other;
a plurality of corrugate fins (120, 120) provided between the plurality of tubes(110,110);
a first header (140) to which one of the ends of each of the plurality of tubes (110,110) is connected;
a second header (150) to which the other one of the ends of each of the plurality of tubes is connected;
a first piping joint (160) provided on the first header (140) or the second header (150); and
a second piping joint (170) provided on the first header (140) or the second header (150),
the first header (140) and the second header (150) are partitioned in the interiors thereof by partitioning devices (141,151), respectively, the plurality of tubes (110,110) constitute a plurality of tube sets (A, B, C, and D) in accordance with intervals of the interiors of the first header (140) and the second header (150) partitioned by the partitioning devices (141, 151), the coolant flowed in from one of the first piping joint (160) and the second piping joint (170) passes through the plurality of tube sets while exchanging heat with air outside the cabin of the vehicle and flows out from the other one of the first piping joint (160) and the second piping joint (170),
the plurality of tubes (110, 110) are arranged so that one end is oriented upward and the other end is oriented downward with respect to the vertical direction of the vehicle,
the first piping joint (160) or the second piping joint (170) configured to flow out the coolant during the cooling operation is provided on the second header (150), and
three or more of the tube sets (A, B, C, and D) are provided, **characterized in that** the number of tubes (110, 110) in the respective tube sets (A, B, C, and D) is basically the same.

2. The heat exchanger (100) according to Claim 1, wherein
the number of the tube sets (A, B, C, and D) is an even number, and both of the first piping joint (160) and the second piping joint (170) are provided on the second header (150).

3. The heat exchanger (100) according to Claim 1 or 2, wherein
the number of the tube sets (A, B, C, and D) falls within a range from 4 to 6.

4. The heat exchanger (100) according to any one of Claims 1 to 3, wherein
a length of the tubes (110,110) is 0.9 m or shorter.

5. The heat exchanger (100) according to Claim 4, wherein
a total cross-sectional area of flow channels of the coolant in the tube sets (A, B, C, and D) falls within a range from 150 to 500 mm².

6. A vehicle air-conditioning refrigeration cycle (1) comprising:
a compressor (10) configured to compress coolant;
an expansion apparatus (20) configured to expand the compressed coolant;
a first heat exchanger (100) configured to exchange heat between air outside a cabin of a vehicle and the coolant, according to any of claims 1-5;
a second heat exchanger (30) configured to exchange heat between air in the cabin of the vehicle and the coolant; and
a coolant flow channel switching device (40) configured to switch a flow of the coolant between a cooling operation and a warming operation.

## Patentansprüche

1. Wärmetauscher (100), der dazu ausgelegt ist, in einem Fahrzeugklimaanlagenkühlzyklus (1) verwendet zu werden, um eine Fahrgastzelle eines Fahrzeugs abzukühlen und aufzuwärmen und Wärme zwischen Umgebungsluft außerhalb der Fahrgastzelle des Fahrzeugs und Kühlmittel auszutauschen, Folgendes umfassend:
mehrere Rohre (110, 110), die parallel zueinander angeordnet sind;
mehrere Wellrippen (120, 120), die zwischen den mehreren Rohren (110, 110) vorgesehen sind;
ein erstes Kopfteil (140), mit dem eines der Enden jedes der mehreren Rohre (110, 110) verbunden ist;
ein zweites Kopfteil (150), mit dem das andere der Enden jedes der mehreren Rohre verbunden ist;
eine erste Rohrverbindung (160), die am ersten Kopfteil (140) oder am zweiten Kopfteil (150) vorgesehen ist; und eine zweite Rohrverbindung (170), die am ersten Kopfteil (140) oder am zweiten Kopfteil (150) vorgesehen ist, wobei das erste Kopfteil (140) und das zweite Kopfteil (150) im Inneren jeweils durch Trennvorrichtungen (141, 151) unterteilt sind, wobei die mehreren Rohre (110, 110) mehrere Rohrsätze (A, B, C und D) entsprechend der Intervalle des durch die Trennvorrichtungen (141, 151) unterteilten Inneren des ersten Kopfteils (140) und des zweiten Kopfteils (150) darstellen, wobei das von der ersten Rohrverbindung (160) oder von der zweiten Rohrverbindung (170) eingeströmte Kühlmittel durch die mehreren Rohrsätze verläuft und gleichzeitig Wärme mit der Umgebungsluft außerhalb der Fahrgastzelle des Fahrzeugs austauscht und aus dem anderen der ersten Rohrverbindung (160) und der zweiten Rohrverbindung (170) ausströmt, wobei die mehreren Rohre (110, 110) so angeordnet sind,
dass ein Ende in Bezug zur vertikalen Richtung des Fahrzeugs nach oben ausgerichtet ist und das andere Ende nach unten ausgerichtet ist,
wobei die erste Rohrverbindung (160) oder die zweite Rohrverbindung (170), die dazu ausgelegt ist, das Kühlmittel während des Kühlvorgangs auszuströmen, am zweiten Kopfteil (150) vorgesehen ist, und
wobei drei oder mehr Rohrsätze (A, B, C und D) vorgesehen sind, **dadurch gekennzeichnet, dass** die Anzahl der Rohre (110, 110) in den jeweiligen Rohrsätzen (A, B, C und D) im Wesentlichen gleich ist.

2. Wärmetauscher (100) nach Anspruch 1, wobei
die Anzahl der Rohrsätze (A, B, C und D) eine gerade Zahl ist und sowohl die erste Rohrverbindung (160) als auch die zweite Rohrverbindung (170) am zweiten Kopfteil (150) vorgesehen sind.

3. Wärmetauscher (100) nach Anspruch 1 oder 2, wobei
die Anzahl Rohrsätze (A, B, C und D) in den Bereich von 4 bis 6 fällt.

4. Wärmetauscher (100) nach einem der Ansprüche 1 bis 3, wobei
die Länge der Rohre (110, 110) 0,9 m oder weniger beträgt.

5. Wärmetauscher (100) nach Anspruch 4, wobei
eine Gesamtquerschnittsfläche der Strömungskanäle des Kühlmittels in den Rohrsätzen (A, B, C und D) in einen Bereich von 150 bis 500 mm² fällt.

6. Fahrzeugklimaanlagenkühlzyklus (1), Folgendes umfassend:
einen Verdichter (10), der dazu ausgelegt ist, Kühlmittel zu verdichten;
eine Ausdehnungsvorrichtung (20), die dazu ausgelegt ist, das verdichtete Kühlmittel auszudehnen;
einen ersten Wärmetauscher (100) nach einem der Ansprüche 1-5, der dazu ausgelegt ist, Wärme zwischen der Umgebungsluft außerhalb der Fahrgastzelle eines Fahrzeugs und dem Kühlmittel auszutauschen;
einen zweiten Wärmetauscher (30), der dazu ausgelegt ist, Wärme zwischen Luft in der Fahrgastzelle des Fahrzeugs und dem Kühlmittel auszutauschen; und
eine Kühlmittelströmungskanalschaltvorrichtung (40), die dazu ausgelegt ist, eine Kühlmittelströmung zwischen einem Kühlvorgang und einem Wärmvorgang umzuschalten.

## Revendications

1. Échangeur de chaleur (100) configuré pour être utilisé dans un cycle de réfrigération pour la climatisation de véhicule (1) pour refroidir et réchauffer une cabine d'un véhicule et échanger de la chaleur entre l'air à l'extérieur de la cabine du véhicule et le fluide de refroidissement, comprenant:
une pluralité de tubes (110, 110) disposés en parallèle les uns aux autres;
une pluralité d'ailettes ondulées (120, 120) prévues entre la pluralité de tubes (110, 110);
un premier collecteur (140) auquel l'une des extrémités de chacun de la pluralité de tubes (110, 110) est reliée;
un second collecteur (150) auquel l'autre extrémité de chacun de la pluralité de tubes est reliée;
un premier raccord de tuyauterie (160) prévu sur le premier collecteur (140) ou le second collecteur (150); et
un second raccord de tuyauterie (170) prévu sur le premier collecteur (140) ou le second collecteur (150),
le premier collecteur (140) et le second collecteur (150) sont séparés dans leurs intérieurs par des dispositifs de séparation (141, 151), respectivement, la pluralité de tubes (110, 110) constituent une pluralité d'ensembles de tubes (A, B, C et D) selon des intervalles des intérieurs du premier collecteur (140) et du second collecteur (150) séparés par les dispositifs de séparation (141, 151), le fluide de refroidissement s'écoulant d'un raccord parmi le premier raccord de tuyauterie (160) et le second raccord de tuyauterie (170) passe à travers la pluralité d'ensembles de tubes tout en échangeant de la chaleur avec de l'air à l'extérieur de la cabine du véhicule et sort de l'autre raccord parmi le premier raccord de tuyauterie (160) et le second raccord de tuyauterie (170),
la pluralité de tubes (110, 110) sont disposés de telle sorte qu'une extrémité est orientée vers le haut et l'autre extrémité est orientée vers le bas par rapport à la direction verticale du véhicule,
le premier raccord de tuyauterie (160) ou le second raccord de tuyauterie (170) configuré pour évacuer le fluide de refroidissement pendant l'opération de refroidissement est prévu sur le second collecteur (150), et
trois ensembles ou plus des ensembles de tubes (A, B, C et D) sont prévus, **caractérisé en ce que** le nombre de tubes (110, 110) dans les ensembles de tubes respectifs (A, B, C et D) est essentiellement le même.

2. Échangeur de chaleur (100) selon la revendication 1, dans lequel:
le nombre des ensembles de tubes (A, B, C et D) est un nombre pair, et le premier joint de tuyauterie (160) et le second joint de tuyauterie (170) sont tous deux prévus sur le second collecteur (150).

3. Échangeur de chaleur (100) selon la revendication 1 ou 2, dans lequel:
le nombre d'ensembles de tubes (A, B, C et D) se situe entre 4 et 6.

4. Échangeur de chaleur (100) selon l'une quelconque des revendications 1 à 3, dans lequel:
une longueur des tubes (110, 110) est égale ou inférieure à 0,9 m.

5. Échangeur de chaleur (100) selon la revendication 4, dans lequel:
une surface totale de section transversale des canaux d'écoulement du fluide de refroidissement dans les ensembles de tubes (A, B, C et D) se situe entre 150 et 500 mm².

6. Cycle de réfrigération pour la climatisation de véhicule (1) comprenant:
un compresseur (10) configuré pour comprimer le liquide de refroidissement;
un appareil d'expansion (20) configuré pour dilater le fluide de refroidissement comprimé;
un premier échangeur de chaleur (100) configuré pour échanger de la chaleur entre l'air à l'extérieur de la cabine d'un véhicule et le liquide de refroidissement, selon l'une quelconque des revendications 1 à 5;
un second échangeur de chaleur (30) configuré pour échanger de la chaleur entre l'air dans la cabine du véhicule et le liquide de refroidissement; et
un dispositif de commutation de canal d'écoulement de fluide de refroidissement (40) configuré pour commuter un écoulement du fluide de refroidissement entre une opération de refroidissement et une opération de chauffage.
